# EUROPEAN PATENT SPECIFICATION

(11) **EP 3 315 919 B1**
(45) Date of publication and mention of the grant of the patent: **09.10.2019**
(21) Application number: 17191558.0
(22) Date of filing: 18.09.2017
(51) Int. Cl.: G01D 5/14, G01V 3/08, G08G 1/042

(54) **VEHICLE PRESENCE DETECTOR**
DETECTEUR DE PRESENCE DE VEHICULE
FAHRZEUG-ANWESENHEITSDETEKTOR

(30) Priority: 31.10.2016 CZ 20160673
(43) Date of publication of application: 02.05.2018
(73) Proprietor: Ceské vysoké ucení technické v Praze, 16000 Praha 6- Dejvice (CZ)
(72) Inventor: JANOSEK, Michal, 40755 Dolni Podluzi (CZ); PLATIL, Antonin, 15000 Praha 5 - Smichov (CZ)
(74) Representative: Kratochvil, Vaclav

(56) References cited:
- EP-A1- 0 740 279
- EP-A2- 0 829 736
- US-A1- 2010 134 322
- US-A1- 2014 247 043

## Description

### Background of the Invention

The solution deals with contactless detection of a car presence by means of magnetic sensors, which is particularly advantageous for monitoring the occupancy of a parking space or for monitoring and controlling traffic.

### Description of Prior Art

Contactless vehicle presence detection systems always use the appropriate physical sensor connected to the computing unit with an evaluation algorithm, either as a standalone detector or a whole network of detectors, for example for monitoring of parking lots. The key distinguishing criterion of these systems is the type of sensors used for detection of a car presence. Optical sensors such as light barriers or distance and image sensors or cameras are used. For example, ultrasonic sensors are used also.

Detection is advantageously provided by magnetic field sensors which, unlike ultrasonic and optical sensors, do not respond to the presence of people, are maintenance-free and resist the dusty environment.

In one embodiment, the magnetic field sensors use induction coils embedded, for example, in the road or floor. However, their major disadvantage is that they are not capable of stationary detection; only the arrival or departure of a car with a certain minimum speed is detected.

Another embodiment uses vector sensors of the magnetic field, such as AMR, fluxgate, GMR, SDT. An overview of their parameters and applications is listed, for example, in the book Ripka, "Magnetic sensors and magnetometers", Artech House, 2001. These vector sensors scan also the direct or very slowly variable component of the magnetic field. The sensors thus detect both the dynamic signal as in the case of the induction sensors and the stationary signal "car is present / absent". However, the disadvantage is that the direct and slowly variable magnetic field is generally unstable and is influenced by many surrounding factors such as steel structures, surrounding cars, changes in the Earth magnetic field, and similar. Therefore, a differential, i.e. gradiometric, arrangement of sensors is advantageously used to suppress interference, where two or more sensors located in the same direction are used for calculation of the difference of the measured signal, which to some extent suppresses distant, almost homogeneous interference, unlike the signal from the closest source of the magnetic moment, which is a car. However, due to the low sensitivity of the sensors used and the detection methods, the deployment of the detectors is limited to the location and orientation "under the vehicle" where the signature from the car is strongest. The drawback of current detectors is also their dimensions when in one embodiment where the sensors are placed under the car, the head size is approximately 40 cm.

In a prior art, as described in patent application EP0829736A3 "Verfahren zum Messen von Verzerrungen des Erdmagnetfeldes und Objektsensor zur Durchführung des Verfahrens" both homogeneous and gradiometric measurements utilizing two or more sensors are proposed, whereas the sensors can be in-line and the homogeneous field calculated as an average of the two sensors, and the gradient estimated as the difference (it can be also divided by the distance of the two sensors to have the estimation in physical units). It has been also described that it is advantageous to have a short distance between the two sensors, which reflects the fact that at a shorter distance the noise of the available sensors is manifested, and at a greater distance, the magnetic field gradient cannot be measured with sufficient accuracy considering that the typical distance of the detector from the vehicle is less than 1 m.

In all existing embodiments, a vehicle detection block is used to process the signal from the sensors and to evaluate the presence of a vehicle, which can be defined as a computing unit with an evaluation algorithm that can be implemented, for example, as a software in microprocessor, programmable field array FPGA, or other computing means. The evaluation algorithm can, for instance, be some of the classification methods listed in the article Kiang, Melody Y, "A comparative assessment of classification methods", Decision Support Systems 35.4, 2003, pp. 441-454. One of another possible evaluation algorithms is described in the patent CN105279975 (A) - 2016 "*Non-standard parking detection method based on magnetic field sensor*". Another option to implement the evaluation algorithm is the neural network method, or searching in the symptom database or other methods described in Cox, D. R. & E. J. Snell, "Analysis of binary data", 1999. The magnetic signature of a vehicle, that is, its magnetic moment, is not constant and therefore it is necessary to test and adaptively adjust the criteria of the above-mentioned classification methods, so-called "method learning", using sets of cars with different sizes, by different manufacturers, at different speeds, orientations, and similar.

However, the basic disadvantage of direct processing of the signal from the sensors by the methods mentioned above is the fact that the magnetic signature of a vehicle, that is, its magnetic moment, is not constant and therefore it is necessary to test and adaptively adjust the criteria of the above-mentioned classification methods, so-called "method learning", using sets of cars with different sizes, by different manufacturers, at different speeds, orientations, and similar.

### Summary of the Invention

The setbacks mentioned above are eliminated by the presented vehicle presence detector with vector sensors of the magnetic field, which is compact, sensitive and selective. This detector includes a vehicle presence evaluation block that is equipped with software or hardware for evaluating the information from vector sensors, wherein both the vector sensors and the vehicle presence evaluation block are implemented by some of the known methods. The principle of the new solution is based on the fact that the detector comprises the first and the second vector sensor which are aligned in a straight line, they have parallel direction, and their vertical distance ranges from 2 cm to 20 cm. The output of both the first and second sensor enter a block calculating H/G as in prior art, which is in turn proportional to the distance to the vehicle. This function can be implemented either by hardware or software as described in prior art. This H/G (distance evaluation block) is inserted between the first and second vector sensor outputs and the first input of the vehicle presence evaluation block.

The principle of the new solution is based on the fact that the detector comprises an additional third and fourth vector sensor, which are orthogonal to the first (and thus also the second) vector sensor, and thus are forming and orthogonal triad, which enables to calculate the total value of the magnetic field which then enters the second input of the vehicle presence evaluation block.

The vehicle presence detector is connected as follows. The output of the first vector sensor is connected to the input of the first block of converting the uncalibrated output values from this first vector sensor to the calibrated values. The sensitivity of the first sensor, obtained by any of the known calibration methods described in the literature, is used for the conversion. The output of the first block of converting the uncalibrated output values from this first vector sensor to the calibrated values proportional to the magnetic flux density marked as B₁ is connected to both the first input of the summing circuit, and to the first input of the differential circuit. Simultaneously, the output of the second vector sensor is connected to the input of the second block of converting the uncalibrated output values from the second vector sensor to the calibrated values proportional to the magnetic flux density indicated as B₂, the sensitivity of the second sensor obtained analogically as for the first sensor is used for the conversion, and the output of this block is interconnected with both the second input of the summing circuit, and with the second input of the differential circuit.

The summing circuit output is via the circuit for dividing by two interconnected with the first input of the divider. The output of the differential circuit is via the divider for dividing by number d, specifying the distance between the first and second vector sensors, connected to the second input of the divider, the output of which is connected to the input of the vehicle presence evaluation block. The output of this divider and simultaneously the input of the vehicle presence evaluation block is therefore the signal L=H/G, where H was obtained as (B₁+B₂)/2 and G as (B₁-B₂)/d.

The third and fourth vector sensors together with the first vector sensor form a triad in an orthogonal configuration. Both the third and fourth vector sensors are connected to the relevant inputs of the magnetic field scalar value calculation block. The already calibrated value B1 of the first vector sensor is also connected to the magnetic field scalar value calculation block. The scalar value calculation block in the first step converts the uncalibrated values of the third and fourth sensors to the calibrated values marked as B3 and B4 and then performs the operation √(B12+B32+B42), which is a common procedure for determining the scalar value of a vector from three orthogonal components.

The output of the magnetic field scalar value calculation block is interconnected with the above-mentioned second input of the vehicle presence evaluation block. Information about the scalar value is therefore used as an additional information for evaluation of the vehicle presence, which is advantageous for increasing the accuracy of a vehicle presence estimation.

Further, it is advantageous if the noise of the first and second vector sensors is lower than 10 nT/√Hz @ 1 Hz. Analogically, it is advantageous if the noise of the third and fourth vector sensors is lower than 10 nT/√Hz @ 1 Hz.

In another preferred embodiment, the detector is positioned relative to the assumed location of the car so that the line, on which the first and second vector sensors are located, is oriented towards the assumed occurrence of the car so that it is on that line. In such a case, the accuracy of the distance evaluation is greatest. The same applies to the arrangement with four vector sensors.

Further, it is advantageous if the output of the vehicle presence evaluation block is interconnected with a control circuit equipped with software for collecting and evaluating the data via a sensor network, either as a standalone detector, or as multiple detectors connected to the sensor network. A suitable sensor network can be RS-485, CAN-BUS, Ethernet or some other commonly known bus.

The advantage of the new solution is that the additional information about the total value of the Earths magnetic field, which is not dependent on the vehicle detector (and thus vector sensors) orientation, is provided. Thus the detector is less sensitive to angular drifts, physical misalignments and also is to a large state immune to changes in the Earth's field. This then allows for an increased detection distance, since these effects are less pronounced when the detector is positioned just under the car as in present inventions .Also the total (scalar) value of magnetic field is no dependendt on the orientation of the magnetic dipole, which can represent the car magnetic moment, which is not constant in time and depends neither on the car type, make etc.

With the presented detection, detection is reliable also if, for example, right above the empty parking space, but one floor higher, that is on the ceiling, on which the described detector is attached, another vehicle is parked. In this case, we have both the scalar field but also the vectorial information about H, G and the calculated distance, thus false detection of the car presence is decreased. The location on the side of the car is advantageous, for example, for applications used for the traffic analysis and management to determine the frequency of occurrence of vehicles at a junction, road, and the like. Positioning of the detector above the automobile also eliminates the major structural disadvantage of previous solutions with magnetic sensors, especially in underground car parking houses, where in the new embodiment it is possible to place the detector on the ceiling without any construction work on the floor or road.

### Explanation of Drawings

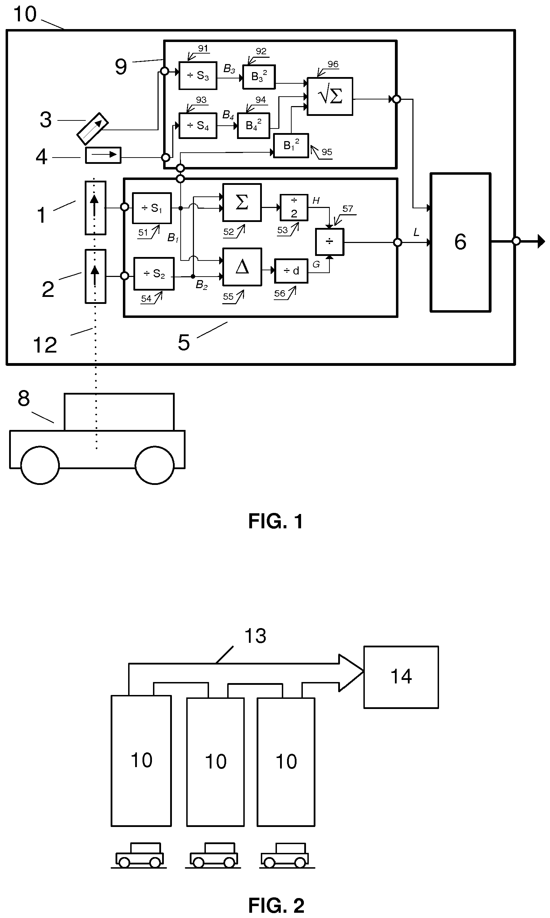

The presented solution will be further described with reference to the attached drawings. An embodiment of the detector in position above the parking space is shown in Fig. 1. Fig. 2 shows multiple detectors interconnected by means of a bus with a control circuit..

### Detailed Description of the Preferred Embodiments

An example of a vehicle presence detector embodiment is shown in Fig. 1. The detector comprises of a first vector sensor 1 and a second vector sensor 2, which lie on one line 12 and have a concurrent direction, and of vector sensor 3 and the fourth vector sensor 4, which are arranged so that they form an orthogonal triad with the first vector sensor 1 (their directions cover all the coordinates of the Cartesian coordinate system). Their vertical distance between the first and second vector sensors 1 and 2 range from 2 cm to 20 cm and their noise is less than 10 nT/√Hz @ 1 Hz.

Between the outputs of the first vector sensor 1 and the second vector sensor 2 and the input of the vehicle presence evaluation block 6, the block 5 of calculation of the vehicle distance from the detector is inserted. The interconnection is realized in such a way that the output of the first vector sensor 1 is connected to the input of the first block 51 of converting the uncalibrated output values from this first vector sensor 1 to the calibrated values. The output of the first converting block 51 is connected to both the first input of the summing circuit 52, and to the first input of the differential circuit 55. Similarly, the output of the second vector sensor 2 is connected to the input of the second block 54 of converting the uncalibrated output values from the second vector sensor 2 to the calibrated values. The output of the second converting block 54 is connected to both the second input of the summing circuit 52, and to the second input of the differential circuit 55. The output of the summing circuit 52 is via the circuit 53 for dividing by two interconnected with the first input of the divider 57. The output of the differential circuit 55 is via the divider 56 for dividing by number d specifying the distance between the first vector sensor 1 and the second vector sensor 2 connected to the second input of the divider 57, the output of which is connected to the first input of the vehicle presence evaluation block 6, while its output 7 will provide the information whether a vehicle 8 is present or not.

The first vector sensor 1 and the second vector sensor 2 respectively measure the magnetic field, which results in uncalibrated values obtained at their outputs. These are then converted to calibrated values in the first converting block 51 and the second converting block 54 respectively by dividing by the sensitivity S₁ of the first vector sensor 1 and by the sensitivity S₂ of the second vector sensor 2 respectively. These sensitivities are obtained by calibrating the respective sensor, which is well known and described in the literature. The output of the first converting block 51 then is the information about the magnitude of the magnetic flux density B₁ already represented in the physical units (T) detected by the first vector sensor 1 at the point where it is located. Similarly, the output of the second converting block 54 then is the information about the magnitude of the magnetic flux density B₂ detected by the second vector sensor 2 at the point where it is located. Thus obtained values B₁ and B₂ are summed in the summing circuit 52 and subsequently they are divided by two in the dividing circuit 53 for dividing by two to produce their mean value, i.e. the output is the information about the homogeneous component of the field H, and is therefore an estimate of the magnetic flux density in the center on line 12 between the first vector sensor 1 and the second vector sensor 2. Differential circuit 55 implements the difference of magnetic flux densities B₁ and B₂, no matter in which order. The output of the differential circuit 55 is led to the divider 56 where it is divided by the number d, which indicates the distance between the first vector sensor 1 and the second vector sensor 2. The output of the divider 56 is the information about the gradient component of the field G, which is an estimate of the magnetic flux density gradient again in the center of line 12 between the first vector sensor 1 and the second vector sensor 2. Information about the detected homogeneous component H and the gradient component G is led to the input of the divider 57, where the function (H/G) is performed, which at the output of the block 5 of calculation of the vehicle distance from the detector specifies the information L, which is proportional to the distance of the vehicle 8 from the detector 10.

This information enters the vehicle presence evaluation block 6 where some of the commonly known method is implemented to provide the decision whether a vehicle is present, such as thresholding at a certain level, a database system, neural networks, and so on.

A magnetic field scalar value calculation block 9 processes the information from vector sensors 1, 3 and 4. The output of the third vector sensor 3 is interconnected with one input of the magnetic field scalar value calculation block 9 √(B12+B32+B42), where B₁, B₃, and B₄ are the magnitudes of the magnetic flux density measured by the corresponding vector sensor 1, 3, 4, while its second input is interconnected with the output of the fourth vector sensor 4. The third input of the magnetic field scalar value calculation block 9 is connected to the output of the first block 51 of converting the uncalibrated output values from the first vector sensor 1 to the calibrated values of the block 5 of calculation of the vehicle distance from the detector. The output of the magnetic field scalar value calculation block 9 is interconnected with the second input of the vehicle presence evaluation block 6. The implementation of the magnetic field scalar value calculation block 9 is quite common. It consists of a third block 91 of converting the uncalibrated output values from the third vector sensor 3 to the calibrated values, and its output is via the first circuit 92 of the second power connected to the first input of the block 96 of the square root of the sum. Further, it comprises the fourth block 93 of converting the uncalibrated output values from the fourth vector sensor 4 to the calibrated values, and its output is via the second circuit 94 of the second power connected to the second input of the block 96 of the square root of the sum. The output of the first block 51 of converting the uncalibrated output values from the first vector sensor 1 to the calibrated values is via the third circuit 95 of the second power connected to the third input of the block 96 of the square root of the sum. The output of the block 96 of the square root of the sum is connected to the second input of the vehicle presence evaluation block 6. The information about the vector scalar value obtained from the first vector sensor 1, the third vector sensor 3 and the fourth vector sensor 4 in the magnetic field scalar value calculation block 9 then serves as a secondary information for improving the classification.

Another possible improvement is the embodiment where the individual vehicle presence detectors are interconnected in a shared distributed network, which is serving, for example, for detecting the occupancy of parking spaces on a large parking lot. In Fig. 3, three vehicle presence detectors 10 are connected by means of a sensor network 13 to the control circuit 14.

### Industrial Applicability

The vehicle presence detector can be used to facilitate the management of parking spaces in shopping malls, parking houses, public spaces and also private parking lots, and it can be further used for the traffic regulation and analysis, etc.

## Claims

1. Vehicle presence detector comprising vector sensors of magnetic field and a vehicle presence evaluation block (6) equipped with software or hardware for evaluating the information from the vector sensors, wherein a first vector sensor (1) and a second vector sensor (2) sensitive directions lie on a single line (12), they have parallel direction and their vertical distance ranges from 2 cm to 20 cm, and between the outputs of the first vector sensor (1) and the second vector sensor (2) and the input of the vehicle presence evaluation block (6) is inserted a block (5) of calculation of the vehicle distance from the detector such that the output of the first vector sensor (1) is connected to the input of a first block (51) for converting the uncalibrated output values from the first vector sensor (1) to the calibrated values proportional to the magnetic flux density, the output of which is connected both to a first input of a summing circuit (52), and to a first input of a differential circuit (55), and simultaneously the output of the second vector sensor (2) is connected to an input of a second block (54) for converting the uncalibrated output values from the second vector sensor (2) to the calibrated values proportional to the magnetic flux density, the output of which is connected both to a second input of the summing circuit (52), and to a second input of the differential circuit (55), while the output of the summing circuit (52) is interconnected with the first input of the divider (57) via a circuit (53) for dividing by number two and the output of the differential circuit (55) is connected to the second input of the divider (57) via a further divider (56) for dividing by a number d specifying the distance between the first vector sensor (1) and the second vector sensor (2), the output of the divider (57) is connected to a first input of the vehicle presence evaluation block (6) **characterized by the fact that** it comprises a third vector sensor (3) and a fourth vector sensor (4), which form together with the first vector sensor (1) a triad in orthogonal configuration, and their outputs enter a magnetic field scalar value calculation block (9) realizing the function √(B12+B32+B42), where B₁, B₃, and B₄ are calibrated values proportional to the magnetic flux density measured by the corresponding vector sensor (1,3,4), in such a way that the ouput of the third vector sensor (3) is interconnected with the first input of the scalar calculation block (9), while its second input is interconnected with the output of the fourth vector sensor (4), and its third input is interconnected with the output of the first block (51) for converting the uncalibrated output values from the first vector sensor (1) to the calibrated values proportional to the magnetic flux density of the block (5) of calculation of the vehicle distance from the detector, while the output of the magnetic field scalar value calculation block (9) is interconnected with a second input of the vehicle presence evaluation block (6).

2. Detector according to claim 1 **characterized by the fact that** the noise of the third vector sensor (3) and the fourth vector sensor (4) is less 10 nT/√Hz @ 1 Hz.

3. Detector according to any of claims 1 to 2 **characterized by the fact that** the output of the vehicle presence evaluation block (6) is interconnected with the control circuit (14) equipped with the software for data collection and assessment by means of sensor network (13), either individually, or with multiple detectors implemented.

## Patentansprüche

1. Detektor des Vorhandenseins eines Fahrzeugs mit Vektor-Magnetfeldsensor und Block (6) der Auswertung des Vorhandenseins eines Fahrzeugs, ausgestattet mit Software oder Hardware zur Auswertung von Informationen von Vektorsensoren, wo der erste Vektorsensor (1) und der zweite Vektorsensor (2), die auf einer Linie (12) liegen, eine übereinstimmende Richtung haben und deren vertikaler Abstand zwischen 2 cm bis 20 cm liegt, und zwischen den Ausgängen des ersten Vektorsensors (1) und des zweiten Vektorsensors (2) und Eingang des Blocks (6) der Auswertung des Vorhandenseins eines Fahrzeugs ist ein Block (5) zur Berechnung der Entfernung des Fahrzeugs vom Detektor so angeordnet, dass der Ausgang des ersten Vektorsensors (1) am Eingang des ersten Blocks (51) zur Umrechnung von nicht kalibrierten Ausgangswerten vom ersten Vektorsensor (1) auf kalibrierte Werte entsprechend der magnetischen Induktion angeschlossen ist, dessen Ausgang zum einen mit dem ersten Eingang der Additionsschaltung (52) und zum anderen mit dem ersten Eingang der Differenzschaltung (55) verbunden ist, und zugleich ist der Ausgang des zweiten Vektorsensors (2) am Eingang des zweiten Blocks (54) zur Umrechnung von nicht kalibrierten Ausgangswerten vom zweiten Vektorsensor (2) auf kalibrierte Werte entsprechend der magnetischen Induktion angeschlossen, dessen Ausgang zum einen mit dem zweiten Eingang der Additionsschaltung (52) und zum anderen mit dem zweiten Ausgang der Differenzschaltung (55) verbunden ist, wobei der Ausgang der Additionsschaltung (52) mit dem ersten Eingang der Teilung (57) über Schaltung (53) zum Dividieren durch zwei verbunden ist und der Ausgang der Differenzschaltung (55) ist mit dem zweiten Eingang der Teilung (57) über Teilung (56) zum Dividieren durch die Zahl d verbunden, die die Entfernung zwischen dem ersten Vektorsensor (1) und dem zweiten Vektorsensor (2) angibt, dessen Ausgang der Teilung (57) mit dem ersten Eingang des Blocks (6) der Auswertung des Vorhandenseins eines Fahrzeugs verbunden ist, **gekennzeichnet dadurch, dass** er einen dritten Vektorsensor (3) und einen vierten Vektorsensor (4) enthält, die zusammen mit dem ersten Vektorsensor (1) eine Dreiergruppe in orthogonaler Anordnung bilden, wo der Ausgang des dritten Vektorsensors (3) mit einem Eingang des Blocks (9) der Berechnung der Skalarwerte des Magnetfeldes √(B₁²+B₃²+B₄²) verbunden ist, wo B₁, B₃ a B₄ kalibrierte Werte, entsprechend der magnetischen Induktion, gemessen durch entsprechenden Vektorsensor (1,3,4) sind, mit dessen zweitem Eingang der Ausgang des vierten Vektorsensors (4) verbunden ist und dessen dritter Eingang mit dem Ausgang des ersten Blocks (51) zur Umrechnung von nicht kalibrierten Ausgangswerten vom ersten Vektorsensor (1) auf kalibrierte Werte entsprechend der magnetischen Induktion des Blocks (5) zur Berechnung der Entfernung des Fahrzeugs vom Detektor verbunden ist, wobei der Ausgang des Blocks (9) der Berechnung der Skalarwerte des Magnetfeldes mit dem zweiten Eingang des Blocks (6) der Auswertung des Vorhandenseins eines Fahrzeugs verbunden ist.

2. Der Detektor nach Anspruch 1 **gekennzeichnet dadurch, dass** der dritte Vektorsensor (3) und der vierte Vektorsensor (4) Geräusche unter 10 nT/√Hz @ 1 Hz haben.

3. Der Detektor nach einem der 1 bis 2 Ansprüche **gekennzeichnet dadurch, dass** der Ausgang des Blocks (6) der Auswertung des Vorhandenseins eines Fahrzeugs mit der Steuerschaltung (**14**) verbunden ist, ausgestattet mit Software zur Datenerfassung und -auswertung mithilfe des Sensornetzes (13), und dies entweder einzeln oder mit mehreren Detektoren.

## Revendications

1. Détecteur de présence de véhicule contenant des capteurs vectoriels du champ magnétique et un bloc (6) d'évaluation de présence de véhicule équipé d'un logiciel ou d'un matériel informatique pour évaluer les informations provenant des capteurs vectoriels, où un premier capteur (1) vectoriel et un deuxième capteur (2) vectoriel se trouvent sur une droite (12) et ont une direction concordante et leur distance verticale s'étend entre 2 cm à 20 cm, et entre les sorties du premier capteur (1) vectoriel et du deuxième (2) capteur vectoriel et l'entrée du bloc (6) d'évaluation de présence de véhicule un bloc (5) de calcul de la distance entre le véhicule et le détecteur est agencé de sorte que la sortie du premier capteur (1) vectoriel soit connectée à l'entrée du premier bloc (51) de conversion des valeurs de sortie non calibrées provenant du premier capteur (1) vectoriel en valeurs calibrées proportionnelles à l'induction magnétique, dont la sortie est connectée d'une part à la première entrée du circuit totalisateur (52) et à la première entrée du circuit différentiel (55) et la sortie du second capteur (2) vectoriel est en même temps connectée à l'entrée du deuxième bloc (54) de conversion des valeurs de sortie non calibrées du deuxième capteur (2) vectoriel en valeurs calibrées proportionnelles à l'induction magnétique, dont la sortie est connectée d'une part à la deuxième entrée du circuit (52) totalisateur et à la deuxième entrée du circuit (55) différentiel, la sortie du circuit (52) totalisateur étant connectée à la première entrée du diviseur (57) par l'intermédiaire du circuit (53) pour la division par deux et la sortie du circuit (55) différentiel est connectée à la deuxième entrée du diviseur (57) via un diviseur (56) pour être divisé par le nombre indiquant la distance entre le premier capteur (1) vectoriel et le deuxième capteur (2) vectoriel, dont la sortie du diviseur (57) est connectée à la première entrée du bloc (6) d'évaluation de présence de véhicule **caractérisé en ce qu'** il comprend un troisième capteur (3) vectoriel et un quatrième (4) capteur vectoriel qui forment avec le premier capteur (1) vectoriel une triade d'agencement orthogonal, la sortie du troisième capteur (3) vectoriel étant connectée à une entrée du bloc (9) de calcul de la valeur scalaire du champ magnétique √(B₁²+B₃²+B₄²) où B₁, B₃ et B₄ sont les valeurs calibrées proportionnelles à l'induction magnétique mesurées par le capteur (1,3,4) vectoriel correspondant, dont la deuxième entrée est connectée à la sortie du quatrième capteur (4) vectoriel et dont la troisième entrée est connectée à la sortie du premier bloc (51) de conversion des valeurs de sortie non calibrées du premier capteur (1) vectoriel en valeurs calibrées proportionnelles à l'induction magnétique du bloc (5) de calcul de la distance entre le véhicule et le détecteur, la sortie du bloc (9) de calcul de la valeur scalaire du champ magnétique étant connectée à la deuxième entrée du bloc (6) d'évaluation de présence de véhicule.

2. Détecteur selon la revendication 1, **caractérisé en ce que** les perturbations du troisième capteur (3) vectoriel et du quatrième capteur (4) vectoriel sont inférieures à 10 nT/√Hz @ 1 Hz.

3. Détecteur selon l'une quelconque des revendications 1 à 2, **caractérisé en ce que** la sortie du bloc (6) d'évaluation de présence de véhicule est connectée à un circuit de commande (14) équipé d'un logiciel pour collecter et évaluer des données via un réseau (13) de capteurs, et ce, soit seul, soit dans plusieurs modes de réalisation de détecteurs.
